# EUROPÄISCHE PATENTANMELDUNG

(11) **EP 4 678 959 A1**
(43) Veröffentlichungstag der Anmeldung: **14.01.2026**
(21) Anmeldenummer: 25188172.8
(22) Anmeldetag: 08.07.2025
(51) Int. Cl.: F16K 1/42, F16K 31/06

(54) **VERFAHREN ZUR MONTAGE EINES VENTILS UND EIN VENTIL**

(30) Priorität: 12.07.2024 DE 102024206602
(71) Anmelder: Robert Bosch GmbH, 70442 Stuttgart (DE)
(72) Erfinder: Muehlhoff, Holger, 63768 Hoesbach (DE); Dildey, Bernd, 63860 Rothenbuch (DE)

(57) **Zusammenfassung**

Die vorliegende Offenbarung betrifft Verfahren zur Montage eines Ventils (1) mit einem Gehäuse (2), einem Ventilsitz (3), einem Ventilkörper (4) und einem Hubmagneten (5), in welchem die folgenden Verfahrensschritte in der folgenden Reihenfolge durchgeführt werden:
• Einpressen des Ventilsitzes (3) in das Gehäuse (2) in Richtung des im Gehäuse (2) angeordneten Ventilkörpers (4), insbesondere mittels einer vorzugsweise hydraulischen Presse, währenddessen zum einen einer sich zwischen dem Ventilsitz (3) und dem Ventilkörper (4) ausbildenden Ventilkammer (6) kontinuierlich ein Hydraulikfluid (7) zugeführt wird, und währenddessen zum anderen der zum Erzeugen einer Kraft (F) auf den Ventilkörper (4) in Richtung des Ventilsitzes (3) vorgesehene Hubmagnet (5) mit einem elektrischen Strom beaufschlagt wird,
• Beenden des Einpressens des Ventilsitzes (3) in das Gehäuse (2), wenn ein bestimmter Druck (bP) des Hydraulikfluids (7) innerhalb der Ventilkammer (6) erreicht ist.

Ferner betrifft die vorliegende Offenbarung ein Ventil (1), bei welchem zur vereinfachten Montage zwischen einem Ventilsitz (3) und einem Gehäuse (2) des Ventils (1) eine Pressverbindung (14) ausgebildet ist.

## Beschreibung

Die vorliegende Erfindung betrifft ein Verfahren zur Montage eines Ventils und ein Ventil gemäß dem Oberbegriff des Patentanspruchs 9, insbesondere ein Ventil, mit einem Gehäuse, einem Ventilsitz, einem Ventilkörper und einem Hubmagneten, wobei der Ventilkörper im Gehäuse angeordnet ist und sich zwischen dem Ventilkörper und dem zumindest zum Teil vom Gehäuse aufgenommen Ventilsitz eine Ventilkammer ausbildet, und wobei der Hubmagnet ausgebildet ist, eine Kraft auf den Ventilkörper in Richtung des Ventilsitzes auszuüben.

### Hintergrund der Erfindung

Ventile der vorstehend genannten Bauart dienen vorzugsweise zur Begrenzung eines Systemdruckes und sind z.B. als sogenannte Proportional-Druckbegrenzungsventile ausgeführt. Der Ventilsitz ist bei bekannten Ventilen mit einem Außengewinde in ein Innengewinde des Gehäuses eingeschraubt. Um die Relativposition zwischen dem Ventilsitz und dem Gehäuse zu sichern, ist eine Kontermutter für den Ventilsitz vorgesehen. In einem Verfahren zur Montage eines solchen Ventils wird dann also der Ventilsitz in das Gehäuse eingeschraubt und bei der gewünschten Relativposition zwischen dem Ventilsitz und dem Gehäuse mit der Kontermutter gesichert.

Eine derartige Verbindung zwischen dem Ventilsitz und dem Gehäuse ist aufwendig in der Konstruktion und der Herstellung und somit mit entsprechend hohen Kosten verbunden. Weiterhin führt diese Verbindung zu einer schwierigen Montage des Ventils.

### Kurzbeschreibung der Erfindung

Der vorliegenden Erfindung liegt somit die Aufgabe zugrunde, ein Verfahren zur Montage eines Ventils und ein Ventil bereitzustellen, mittels welcher die Probleme des Stands der Technik reduziert oder beseitigt sind. Insbesondere soll das Verfahren zur Montage des Ventils vereinfacht und in besonders wenigen Schritten möglich sein, insbesondere das Ventil einfach und in wenigen Schritten montierbar sein.

Diese Aufgabe wird zunächst durch ein Verfahren zur Montage eines Ventils gemäß Anspruch 1 gelöst.

Weitere vorteilhafte Ausführungsformen sind Gegenstand der Unteransprüche.

Genauer wird die Aufgabe durch ein Verfahren zur Montage eines Ventils mit einem Gehäuse, einem Ventilsitz, einem Ventilkörper und einem Hubmagneten gelöst, in welchem die folgenden Verfahrensschritte in der folgenden Reihenfolge durchgeführt werden:
- Einpressen des Ventilsitzes in das Gehäuse in Richtung des im Gehäuse angeordneten Ventilkörpers, insbesondere mittels einer vorzugsweise hydraulischen Presse, währenddessen zum einen einer sich zwischen dem Ventilsitz und dem Ventilkörper ausbildenden Ventilkammer kontinuierlich ein Hydraulikfluid zugeführt wird, und währenddessen zum anderen der zum Erzeugen einer Kraft auf den Ventilkörper in Richtung des Ventilsitzes vorgesehene Hubmagnet mit einem elektrischen Strom beaufschlagt wird,
- Beenden des Einpressens des Ventilsitzes in das Gehäuse, wenn ein bestimmter Druck des Hydraulikfluids innerhalb der Ventilkammer erreicht ist.

Nach dem Beenden des Einpressens des Ventilsitzes in das Gehäuse ist eine Zielposition des Ventilsitzes erreicht. Während des Einpressens des Ventilsitzes bildet sich dann zumindest in einem Bereich um diese Zielposition ein Kräftegleichgewicht auf den Ventilkörper aus. Dabei wirkt auf den Ventilkörper eine Kraft auf den Ventilkörper in Richtung des Ventilsitzes mittels des Hubmagneten. Weiterhin wirkt auf den Ventilkörper eine Fluidkraft aufgrund des Druckes des Hydraulikfluids in der Ventilkammer in einer dem Ventilsitz entgegengesetzten Richtung. Während des Einpressens des Ventilsitzes in das Gehäuse bildet sich zwischen dem Ventilkörper und dem Ventilsitz ein Spalt aus, durch welchen das Hydraulikfluid hindurchströmt. Je kleiner der Spalt ist, desto größer ist der Druck des Hydraulikfluids in der Ventilkammer. Der Druck in der Ventilkammer steigt während des Einpressens also an. Durch das beschriebene Verfahren wird die Zielposition des Ventilsitzes in Abhängigkeit des bestimmten, gewünschten Druckes des Hydraulikfluids innerhalb der Ventilkammer und der Menge des elektrischen Stroms, mittels welchem der Hubmagnet beaufschlagt wird, erreicht. In einem späteren Betrieb des Ventils ist der Druck in der Ventilkammer dann in Abhängigkeit der eingestellten Menge des elektrischen Stroms begrenzt, insbesondere eben auf den bestimmten Druck, bei der zugehörigen, bekannten Menge an Strom. Man könnte auch sagen, dass das Ventil somit während der Montage des Ventilsitzes zeitgleich kalibriert wird. Somit kann ein Schritt bei der Montage eingespart werden, nämlich eben das genannte Kalibrieren, welches bei bekannten Ventilen nach der Montage des Ventilsitzes noch durchzuführen ist. Durch dieses Kalibrieren werden Bauteiltoleranzen u.a. des Gehäuses, des Ventilkörpers, des Ventilsitzes und/oder des Hubmagneten ausgeglichen, so dass trotz dieser Bauteiltoleranzen der bestimmte Druck bei der bekannten Menge an Strom, mittels welcher der Hubmagnet beaufschlagt wird, erreicht wird, eben durch die entsprechend angepasste Zielposition des Ventilsitzes. Neben der genannten hydraulischen Presse könnten auch andersartige, wie z.B. elektrische Pressen zum Einsatz kommen. Theoretisch sind auch andersartige Vorrichtungen als Pressen zum Erzeugen der Einpresskraft denkbar.

Bevorzugterweise wird während des Einpressens des Ventilsitzes in das Gehäuse das Hydraulikfluid aus der Ventilkammer und aus dem Gehäuse über einen in dem Gehäuse ausgebildeten Abführkanal, insbesondere zu einem Tank hin, abgeführt.

Somit herrschen beim Einpressen ähnliche strömungstechnische Bedingungen in dem Ventil wie in dem Betrieb des Ventils, so dass die Genauigkeit der Kalibrierung verbessert ist. Auch im Betrieb des Ventils strömt das Hydraulikfluid aus der Ventilkammer und aus dem Gehäuse über den Abführkanal hinaus.

Weiter bevorzugt wird der Hubmagnet während des Einpressens des Ventilsitzes in das Gehäuse mit einem im Wesentlichen konstant hohen elektrischen Strom vorzugsweise von 350mA bis 450mA, insbesondere von 400mA, beaufschlagt.

Mit einem im Wesentlichen konstant hohen elektrischen Strom ist gemeint, dass die gewünschte Toleranz des Stroms ±5% beträgt. Durch das Anlegen des konstant hohen Stroms kann das Einpressen des Ventilsitzes besonders genau bei Erreichen des bestimmten Drucks des Hydraulikfluids innerhalb der Ventilkammer beendet werden, weil der Druck innerhalb der Ventilkammer beim Einpressen entsprechend kontrolliert ansteigt. Der Hubmagnet ist vorzugsweise als ein Proportional-Hubmagnet ausgeführt, bei welchem eine Kraft des Hubmagneten über einen weiten Betriebsbereich des Hubmagneten, insbesondere über einen weiten Hubbereich eines Stößels des Hubmagneten, im Wesentlichen konstant ist.

Es kann vorteilhaft sein, wenn der bestimmte Druck des Hydraulikfluids innerhalb der Ventilkammer, bei welchem das Einpressen des Ventilsitzes in das Gehäuse beendet wird, einen Wert zwischen 15bar bis 25bar, vorzugsweise zwischen 18bar bis 22bar, insbesondere von 20bar, aufweist. Dann ist das Ventil vorteilhafterweise in entsprechenden Bereichen einsetzbar, z.B. in hydraulischen Systemen zur Druckbegrenzung.

Vorzugsweise wird während des Einpressens des Ventilsitzes in das Gehäuse mittels einer zwischen dem Stößel des Hubmagneten und dem Gehäuse angeordneten Feder eine Kraft auf den Stößel in einer dem Ventilsitz entgegengesetzten Richtung ausgeübt.

Die Feder wirkt somit, wie auch die Fluidkraft aufgrund des Druckes des Hydraulikfluids, entgegen der mittels des Hubmagneten auf den Ventilkörper aufgebrachten Kraft. Man könnte auch sagen, dass die Kraft des Hubmagneten durch die Feder reduziert wird. Somit ist durch die Feder ein gewünschter Kraftverlauf in Abhängigkeit des Hubs des Hubmagneten, nämlich einer entsprechenden Position des Stößels des Hubmagneten, realisiert. Bei Verwendung eines Proportional-Hubmagneten kann durch die Feder ein Anstieg der auf den Ventilkörper mittels des Hubmagneten und der Feder ausgeübten Kraft beim Einfahren des Stößels in den Hubmagneten realisiert werden. Die Feder ist vorzugsweise als Druckfeder ausgeführt. Die Feder ist vorzugsweise als Schraubenfeder ausgeführt.

Nach einer bevorzugten Ausführungsform wird das Hydraulikfluid der Ventilkammer mittels einer Pumpe zugeführt und zum Erfassen des bestimmten Druckes des Hydraulikfluids wird innerhalb der Ventilkammer ein Druck des Hydraulikfluids stromabwärts der Pumpe mittels eines Drucksensors gemessen. Somit ist die Zufuhr des Hydraulikfluides zur Ventilkammer und die Messung des Druckes mit besonders einfachen Mitteln und somit entsprechend geringen Kosten realisierbar. Der Druck kann mittels des Drucksensors auch außerhalb der Ventilkammer gemessen werden, solange sichergestellt ist, dass die auftretenden Druckverluste bei Durchströmen der zwischen dem Drucksensor und der Ventilkammer ausgebildeten Strömungskanäle vernachlässigbar klein sind, so dass der am Drucksensor anliegende Druck ausreichend genau dem Druck in der Ventilkammer entspricht.

Nach einer besonders bevorzugten Ausführungsform ist strömungstechnisch zwischen der Pumpe und dem Drucksensor ein Stromregelventil angeordnet, mittels welchem ein im Westlichen konstanter Volumenstrom des Hydraulikfluids von vorzugsweise 0,7L/min bis 0,9L/min, insbesondere von 0,8L/min, zur Ventilkammer hin realisiert wird.

Durch Zufuhr eines konstanten Volumenstroms des Hydraulikfluids zur Ventilkammer ist die Genauigkeit der Kalibrierung weiter verbessert. Die Zielposition des Ventilsitzes ist besonders genau erreichbar. Im nachfolgenden Betrieb des Ventils ist dann die Abhängigkeit der Menge des Stroms, mittels welcher der Hubmagnet beaufschlagt wird, zur Größe des Drucks in der Ventilkammer bei entsprechender Hydraulikfluidzufuhr zur Ventilkammer besonders genau bekannt.

Bevorzugt ist der Ventilsitz nach dem Beenden des Einpressens mit dem Gehäuse durch Realisierung einer entsprechenden Passung zwischen dem Ventilsitz und dem Gehäuse reibschlüssig verbunden.

Somit ist die Anzahl an Schritten zur Durchführung des Verfahrens weiter reduzierbar. Wenn der Reibschluss stark genug ist, muss nach Beenden des Einpressens keine weitere Verbindung zwischen dem Ventilsitz und dem Gehäuse erzeugt werden. Vorzugsweise weisen der Ventilsitz und das Gehäuse während des Einpressens unterschiedlichen Temperaturen auf. Insbesondere weist das Gehäuse während des Einpressens eine höhere Temperatur auf als der Ventilsitz, so dass bei späteren gleich hohen Temperaturen ein besonders starker Reibschluss realisiert ist.

Ferner wird die Aufgabe durch ein Ventil nach Anspruch 9 gelöst.

Ein Aspekt der Erfindung liegt dann im Wesentlichen darin, dass zwischen dem Ventilsitz und dem Gehäuse eine Pressverbindung ausgebildet ist.

Der Reibschluss der Pressverbindung ist vorzugsweise stark genug, dass nach Beenden des Einpressens keine weitere Verbindung zwischen dem Ventilsitz und dem

Gehäuse erzeugt werden muss. Zur Ausbildung der Pressverbindung sind keine weiteren Mittel notwendig. Es muss lediglich die Einpresskraft vorzugsweise auf null verringert werden und die Pressverbindung ist realisiert. Der Ventilsitz und das Gehäuse, insbesondere eine entsprechende Ausnehmung des Gehäuses für den Ventilsitz, können für die Pressverbindung besonderes einfache Formen aufweisen, welche mit geringem Aufwand und entsprechend geringen Kosten herstellbar sind. Zur Ausbildung der Pressverbindung ist vorzugsweise eine bestimmte Passung zwischen dem Ventilsitz und der zugehörigen Ausnehmung des Gehäuses ausgebildet. Im Bereich der Pressverbindung ist der Ventilsitz vorzugsweise hohlzylindrisch ausgebildet. Die zugehörige Ausnehmung des Gehäuses ist im Bereich der Pressverbindung vorzugsweise zylindrisch ausgebildet.

Vorteilhafterweise ist der Ventilsitz mit dem Gehäuse durch eine Verbördelung von Teilen des Ventilsitzes oder des Gehäuses mit Bereichen des jeweiligen anderen Elements verbunden.

Durch die Verbördelung können höhere Kräfte im Betrieb des Ventils auf den Ventilsitz wirken, ohne dass sich die Position des Ventilsitzes, insbesondere dessen Zielposition, relativ zum Gehäuse ändert.

Zusammenfassend ist ein solches Ventil, welches insbesondere mit dem beschriebenen Verfahren montiert ist, zu vielfältigen Anwendungen geeignet. Das Ventil ist z.B. als Druckbegrenzungsventil, insbesondere als Proportional-Druckbegrenzungsventil, zur Begrenzung eines Systemdruckes ausgeführt.

### Kurzbeschreibung der Figuren

Im Nachfolgenden werden bevorzugte Ausführungsformen unter Bezugnahme auf die anliegenden Figuren näher dargestellt.
Fig. 1 zeigt schematisch ein Ventil nach einer bevorzugten ersten Ausführungsform in einer Seitenansicht im Schnitt während des Verfahrens zur Montage des Ventils.
Fig. 2 zeigt ein Diagramm des hier schematisch dargestellten Druckverlaufes des Hydraulikfluids innerhalb der Ventilkammer in Abhängigkeit des Einpresswegs des Ventilsitzes in das Gehäuse.
Fig. 3 zeigt ein Diagramm des hier schematisch dargestellten Kraftverlaufes auf den Ventilkörper in Richtung des Ventilsitzes in Abhängigkeit des Hubs des Hubmagneten.
Fig. 4 zeigt schematisch ein Ventil nach einer bevorzugten zweiten Ausführungsform in einer Seitenansicht im Schnitt.

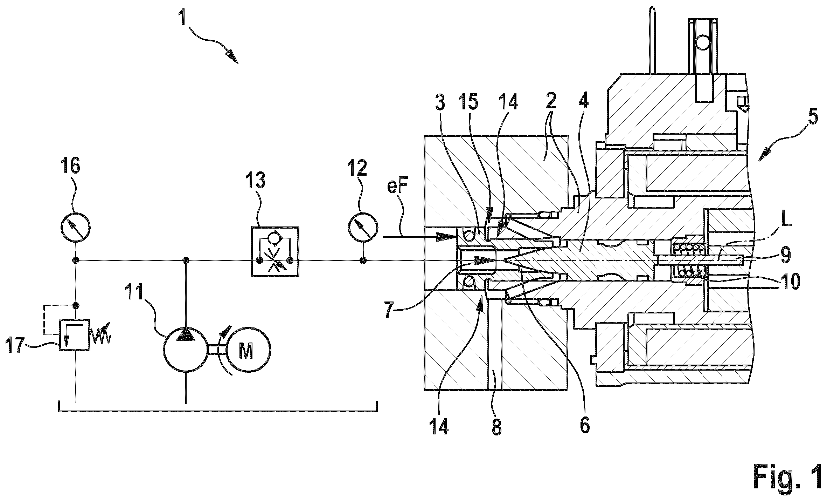

In dem mit Hilfe von Fig.1 symbolisierten Verfahren zur Montage eines Ventils 1 mit einem Gehäuse 2, einem Ventilsitz 3, einem Ventilkörper 4 und einem Hubmagneten 5 werden die folgenden Verfahrensschritte in der folgenden Reihenfolge durchgeführt:
- Einpressen des Ventilsitzes 3 in das Gehäuse 2 in Richtung des im Gehäuse 2 angeordneten Ventilkörpers 4, insbesondere mittels einer vorzugsweise hydraulischen Presse, währenddessen zum einen einer sich zwischen dem Ventilsitz 3 und dem Ventilkörper 4 ausbildenden Ventilkammer 6 kontinuierlich ein Hydraulikfluid 7 zugeführt wird, und währenddessen zum anderen der zum Erzeugen einer Kraft F auf den Ventilkörper 4 in Richtung des Ventilsitzes 3 vorgesehene Hubmagnet 5 mit einem elektrischen Strom beaufschlagt wird,
- Beenden des Einpressens des Ventilsitzes 3 in das Gehäuse 2, wenn ein bestimmter Druck bP des Hydraulikfluids 7 innerhalb der Ventilkammer 6 erreicht ist.

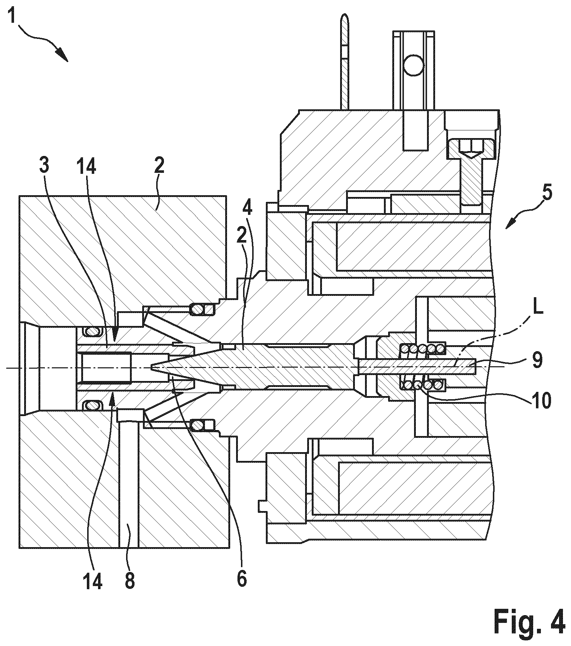

Anstelle des Hydraulikfluids kann auch ein anderes qualifiziertes Medium zum Einsatz kommen. Auch das Ventil 1 gemäß Fig.4 weist ein Gehäuse 2, einen Ventilsitz 3, einen Ventilkörper 4 und einen Hubmagneten 5 auf und ist ebenso in einem solchen Verfahren montierbar.

Der Ventilkörpers 4 ist entlang einer Ventillängsachse L beweglich in dem Gehäuse 2 gehalten. Während des Einpressens des Ventilsitzes 3 wirkt eine Einpresskraft eF auf eine nach außen gewandte Stirnseite des Ventilsitzes 3. Die Einpresskraft eF wirkt in Richtung der Ventillängsachse L. Der Ventilsitz 3 ist als ein rotationssymmetrisches Bauteil ausgeführt, welches einen Durchgangskanal aufweist, durch welchen das Hydraulikfluid 7 der Ventilkammer 6 kontinuierlich zugeführt wird. Die Ventillängsachse L liegt vorzugsweise mittig in diesem Durchgangskanal. Zur Zufuhr des Hydraulikfluids 7 zum Ventilsitz 3 ist z.B. eine hydraulisch dichte Verbindung mit einer Bohrung im Gehäuse 2 und / oder der hydraulischen Presse denkbar. Es könnte auch ein Schlauch mit dem Ventilsitz lösbar verbunden, insbesondere mit dem Ventilsitz verschraubt, sein. Andere Varianten und/oder Elemente zur Zufuhr des Hydraulikfluids 7 sind denkbar. Wichtig dabei ist, dass die Bewegung des Ventilsitzes 3 durch diese Elemente nicht beeinträchtigt ist. Der Ventilkörper 4 weist eine dem Ventilsitz 3 zugewandte vorzugsweise kegelförmige Spitze auf, welche dazu ausgebildet ist, den Ventilkörper 4 bei geschlossenem Ventil 1 gegenüber dem Ventilsitz 3, insbesondere einer dem Ventilkörper 4 zugewandten Kontaktfläche des Ventilsitzes 3 abzudichten. Das Gehäuse 2 ist gemäß der Darstellung aus Fig.1 und Fig.4 mehrteilig ausgeführt.

Während des Einpressens des Ventilsitzes 3 in das Gehäuse 2 wird das Hydraulikfluid 7 aus der Ventilkammer 6 und aus dem Gehäuse 2 über einen in dem Gehäuse 2 ausgebildeten Abführkanal 8, insbesondere zu einem Tank hin, abgeführt. Somit ist die kontinuierliche Zufuhr des Hydraulikfluids 7 ermöglicht, ohne dass sich zu hohe Drücke in der Ventilkammer 6 einstellen. Auch im Betrieb des dann geöffneten Ventils 1 wird das Hydraulikfluid 7 aus der Ventilkammer 6 und aus dem Gehäuse 2 über den Abführkanal 8 abgeführt, so dass beim Einpressen des Ventilsitzes 3 in das Gehäuse 2 ähnliche Bedingungen herrschen, wie im Betrieb des geöffneten Ventils 3.

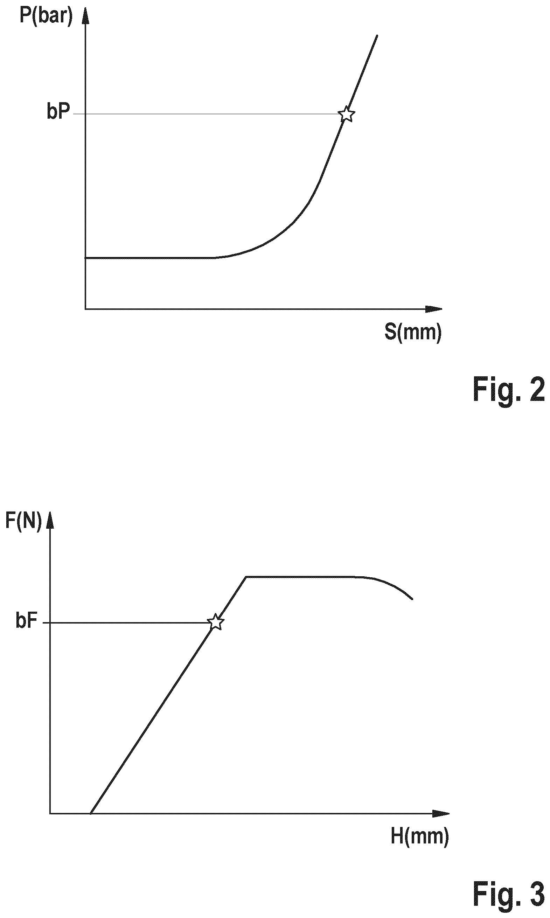

Anhand von Fig.2 wird der Druckverlauf des Druckes P innerhalb der Ventilkammer 6 während des Einpressens beschrieben. Während des Einpressens des Ventilsitzes 3 durchströmt das Hydraulikfluid 7 das Ventil 1 zunächst ohne nennenswerte Druckverluste, wobei dann ein Einpressweg S des Ventilsitzes 3 in das Gehäuse 2 noch geringe Werte aufweist. Wenn dann bei größer werdenden Einpressweg S ein Spalt zwischen dem Ventilsitz 3 und dem Ventilkörper 4 kleiner wird, steigt der Druck P innerhalb der Ventilkammer 6, insbesondere aufgrund erhöhter Strömungsverluste durch den Spalt hindurch, an. Bei dem gewünscht hohen, bestimmten Druck bP des Hydraulikfluids 7 innerhalb der Ventilkammer 6 wird das Einpressen durch Reduzierung oder Wegnahme der Einpresskraft eF abgebrochen. Nach der Reduzierung oder Wegnahme der Einpresskraft eF wird die Zufuhr des Hydraulikfluids 7 zur Ventilkammer 6 beendet. Dem bestimmten Druck bP ist ein bestimmter Einpressweg des Ventilsitzes 3 zugeordnet, wobei bestimmte Einpresswege bei baugleichen Ventilen 1 aufgrund von Bauteiltoleranzen u.a. der Gehäuses 2, der Ventilkörper 4, der Ventilsitze 3 und/oder der Hubmagnete 5 voneinander abweichen können. Durch das Verfahren ist dann sichergestellt, dass bei allen baugleichen Ventilen 2 im Betrieb bei gleichen Mengen an Strom, mittel welchen der jeweilige Hubmagnet 5 beaufschlagt ist, gleiche Drücke P in der Ventilkammer 6 des dann geöffneten Ventils 1 herrschen.

Der Hubmagnet 5 wird während des Einpressens des Ventilsitzes 3 in das Gehäuse 2 mit einem im Wesentlichen konstant hohen elektrischen Strom vorzugsweise von 350mA bis 450mA, insbesondere von 400mA, beaufschlagt. Es wäre auch denkbar, den Hubmagnet 5 mit einer im Wesentlichen konstant hohen elektrischen Spannung zu beaufschlagen. Durch einen konstant hohen elektrischen Strom ist aber eine besonders konstante Kraft vom Hubmagneten 5 auf den Ventilkörper 4 aufbringbar, da Änderungen der Kraft z.B. aufgrund von Temperaturänderungen ausgeglichen werden. Weiterhin könnten die Spannung und/oder der Strom, mittels welcher der Hubmagnet 5 beaufschlagt wird, variieren.

Der bestimmte Druck bP des Hydraulikfluids 7 innerhalb der Ventilkammer 6, bei welchem das Einpressen des Ventilsitzes 3 in das Gehäuse 2 beendet wird, weist einen Wert zwischen 15bar bis 25bar, vorzugsweise zwischen 18bar bis 22bar, insbesondere von 20bar, auf. Andere Werte des bestimmten Drucks bP des Hydraulikfluids 7 innerhalb der Ventilkammer 6, bei welchem das Einpressen des Ventilsitzes 3 in das Gehäuse 2 beendet wird, sind je nach Ausführung des Ventils 1 auch denkbar. Z.B. sind auch deutlich höhere Drücke mit Werten von mehreren 100bar denkbar, welche aber auch vorteilhafterweise mit gleich hohen elektrischen Strömen im Hubmagneten 5 erreicht werden wie der Bereich zwischen 15bar bis 25bar, eben durch entsprechende Ausgestaltung des Ventilsitzes 3 und des Ventilkörpers 4. Je kleiner der so eingestellte hydraulisch zulässige Betriebsbereich des Ventils 1 ist, desto genauer kann dann der Druck in der Ventilkammer 6 im Betrieb des Ventils 1 eingestellt werden.

Während des Einpressens des Ventilsitzes 3 in das Gehäuse 2 wird mittels einer zwischen einem Stößel 9 des Hubmagneten 5 und dem Gehäuse 2 angeordneten Feder 10 eine Kraft auf den Stößel 9 in einer dem Ventilsitz 3 entgegengesetzten Richtung ausgeübt. Mittels des Stößels 9 ist eine Kraft vom Hubmagneten 5 auf den Ventilkörper 4 übertragbar. Die Feder 10 ist als Druckfeder ausgeführt und wirkt zwischen entsprechenden Bereichen des Gehäuses 2 und einer Schulter des Stößels 9. Der Hubmagnet 5, insbesondere eine Spule des Hubmagneten 5, ist mit dem Gehäuse 2 verbunden.

Mit Hilfe von Fig.3 wird nun der Verlauf der Kraft F auf den Ventilkörper 4 in Richtung des Ventilsitzes 3 beschrieben. Fig.3 zeigt den Verlauf der Kraft F in Abhängigkeit eines Hubs H des Hubmagneten 5, wobei der in Fig.3 gezeigte Kraftverlauf auch die Feder 10 mitberücksichtigt. Das Einpressen beginnt bei geringen Werten der Kraft F auf den Ventilkörper 4 nahe der Y-Achse. Dabei ist die Feder 10 zu einem großen Teil insbesondere komplett zusammengedrückt. Nahe der Y-Achse ist der Stößel 9 weit, insbesondere komplett aus dem Hubmagneten 5, insbesondere dessen Spule, in Richtung des Ventilsitzes 3 ausgefahren. Wenn dann der Druck P innerhalb der Ventilkammer 6 aufgrund des Einpressens des Ventilsitzes 3 ansteigt, wird der Stößel 9 in den Hubmagneten 5, insbesondere dessen Spule, hineingedrückt, wobei die Feder 10 entspannt wird, so dass die Kraft F des Hubmagneten 5 auf den Ventilkörper 4 in Richtung des Ventilsitzes 3 abzüglich der Federkraft auf den Stößel 9 ansteigt. Die Kraft F steigt durch das Einpressen solange an, bis eine bestimmte Kraft bF auf den Ventilkörper 4 in Richtung des Ventilsitzes 3 erreicht ist. Bei dieser bestimmten Kraft bF wird das Einpressen beendet. Diese bestimmte Kraft bF ist im Gleichgewicht mit der Kraft, welche aufgrund des bestimmten Drucks bP des Hydraulikfluids 7 innerhalb der Ventilkammer 6 auf den Ventilkörper 4 vom Ventilsitz 3 weg wirkt. Wenn der Hubmagnet 5 gemäß Fig.3 als Proportional-Hubmagnet ausgeführt ist, ist die Kraft vom Hubmagneten 5 auf den Ventilkörper 4 im Wesentlichen unabhängig vom Hub H des Hubmagneten 5, was durch den zur x-Achse parallelen Abschnitt des Kraftverlaufes am rechten Ende des Kraftverlaufes symbolisiert ist. In diesem parallelen Abschnitt wirkt keine Kraft mehr von der Feder 10 auf den Ventilkörper 4, die Feder 10 ist hier dann bereits komplett entspannt. Der Anstieg des Verlaufs der Kraft F auf den Ventilkörper 4 in Richtung des Ventilsitzes 3 wird insbesondere eben durch die Feder 10 realisiert.

Das Hydraulikfluid 7 wird der Ventilkammer 6 gemäß Fig.1 mittels einer Pumpe 11 zugeführt. Zum Erfassen des bestimmten Drucks bP des Hydraulikfluids 7 innerhalb der Ventilkammer 6 wird ein Druck P des Hydraulikfluids 7 stromabwärts der Pumpe 11 mittels eines Drucksensors 12 gemessen. Die Pumpe 11 wird z.B. mit einem Motor, insbesondere einem Elektromotor, angetrieben. Mittels der Pumpe 11 wird das Hydraulikfluid 7 z.B. aus einem Tank oder Reservoir angesaugt.

Strömungstechnisch zwischen der Pumpe 11 und dem Drucksensor 12 ist ein Stromregelventil 13 angeordnet, mittels welchem ein im Westlichen konstanter Volumenstrom des Hydraulikfluids 7 von vorzugsweise 0,7L/min bis 0,9L/min, insbesondere von 0,8L/min, zur Ventilkammer 6 hin realisiert wird. Andere Arten der Zufuhr des Hydraulikfluids zur Ventilkammer sind denkbar. Vorzugsweise sind an einen Auslass der Pumpe 11 neben dem Stromregelventil 13 ein weiterer Drucksensor 16 und ein Druckbegrenzungsventil 17 für das Hydraulikfluid 7 angeschlossen. Mittels des Druckbegrenzungsventils 17 können Überdrücke vermieden werden, wobei dazu Hydraulikfluid 7 über das Druckbegrenzungsventil 17 z.B. in den Tank oder das Reservoir abführbar ist. Der weitere Drucksensor 16 dient insbesondere der Steuerung und/oder Regelung der Pumpe 11.

Nach dem Beenden des Einpressens ist der Ventilsitz 3 mit dem Gehäuse 2 durch Realisierung einer entsprechenden Passung zwischen dem Ventilsitz 3 und dem Gehäuse 2 reibschlüssig verbunden.

Nach dem Beenden des Einpressens kann der Ventilsitz 3 mit dem Gehäuse 2 durch ein Verbördeln von Teilen des Ventilsitzes oder des Gehäuses mit Bereichen des jeweiligen anderen Elements verbunden werden. Fig.1 zeigt das Ventil 1 nach einem solchen Verbördeln, wobei während des Verbördelns weiter die Einpresskraft eF und die Kraft vom Hubmagneten 5 wirkt und auch weiterhin Hydraulikfluid 7 der Ventilkammer 6 zugeführt wird. Es ist aber auch möglich, dass das reibschlüssige Verbinden für eine stabile Verbindung des Ventilsitzes 3 mit dem Gehäuse 2 ausreicht und auf das Verbördeln verzichtet werden kann. Fig.4 zeigt eine Variante des Ventils 1, in welcher ein solches Verbördeln nicht vorgesehen ist.

Das in Fig.1 und Fig.4 gezeigte Ventil 1 weist das Gehäuse 2, den Ventilsitz 3, den Ventilkörper 4 und den Hubmagneten 5 auf. Der Ventilkörper 4 ist im Gehäuse 2 angeordnet. Zwischen dem Ventilkörper 4 und dem zumindest zum Teil vom Gehäuse 2 aufgenommen Ventilsitz 3 bildet sich die Ventilkammer 6 aus. Der Hubmagnet 5 ist ausgebildet, eine Kraft F auf den Ventilkörper 4 in Richtung des Ventilsitzes 3 auszuüben. Zwischen dem Ventilsitz 3 und dem Gehäuse 2 ist eine Pressverbindung 14 ausgebildet. Der Ventilsitz 3 ist gemäß Fig.1 gegenüber dem Gehäuse 2 auch mittels einer Dichtung insbesondere einem O-Ring, abgedichtet. Gemäß Fig.4 ist demgegenüber ein innerer Gehäuseteil, nämlich ein sogenanntes Polrohr, gegenüber einem äußeren Gehäuseteil mittels einer Dichtung insbesondere einem O-Ring, abgedichtet. Der Ventilkörper 4 ist entlang der Ventillängsachse L relativ zum Gehäuse 2 bewegbar. Der Ventilkörper 4 ist vorzugsweise rotationssymmetrisch ausgeführt.

Der Ventilsitz 3 ist mit dem Gehäuse 2 gemäß Fig.1 durch eine Verbördelung 15 von Teilen des Ventilsitzes oder des Gehäuses 2 mit Bereichen des jeweiligen anderen Elements verbunden. Wie bereits erwähnt, kann auf die Verbördelung 15 verzichtet werden, wenn die Pressverbindung 14 ausreichend stabil ist, was in Fig.4 gezeigt ist. Die Verbördelung 15 ist, wenn vorhanden, zusätzlich zur Pressverbindung 14 ausgeführt. Gemäß der Darstellung aus Fig.1 ist die Verbördelung 15 wie folgt realisiert. Der Ventilsitz 3 weist eine vorzugsweise umlaufenden Kerbe oder Nut auf. In diese Kerbe oder Nut ist ein Schulterbereich des Gehäuses 2 durch das Verbördeln unter plastischer Verformung hineindrückbar. Bei erzeugter Verbördelung 15 ist dann der Schulterbereich des Gehäuses 2 in der Kerbe oder Nut arretiert, nämlich hier entsprechend ein Formschluss zwischen der Kerbe oder Nut einerseits und dem Schulterbereich andererseits realisiert.

Der Ventilsitz 3 gemäß Fig.4 weist einen im Wesentlichen zylindrischen Außenumfang ohne eine solche Kerbe oder Nut auf.

### Bezugszeichenliste

- 1: Ventil
- 2: Gehäuse
- 3: Ventilsitz
- 4: Ventilkörper
- 5: Hubmagnet
- 6: Ventilkammer
- 7: Hydraulikfluid
- 8: Abführkanal
- 9: Stößel
- 10: Feder
- 11: Pumpe
- 12: Drucksensor
- 13: Stromregelventil
- 14: Pressverbindung
- 15: Verbördelung
- 16: Drucksensor
- 17: Druckbegrenzungsventil für das Hydraulikfluid 7

- eF: Einpresskraft
- F: Kraft auf den Ventilkörper 4 in Richtung des Ventilsitzes 3
- bF: bestimmte Kraft auf den Ventilkörper 4 in Richtung des Ventilsitzes 3
- bP: bestimmter Druck des Hydraulikfluids 7 innerhalb der Ventilkammer 6
- P: Druck des Hydraulikfluids 7 innerhalb der Ventilkammer 6
- S: Einpressweg des Ventilsitzes 3 in das Gehäuse 2
- H: Hub des Hubmagneten 5
- L: Ventillängsachse

## Patentansprüche

1. Verfahren zur Montage eines Ventils (1) mit einem Gehäuse (2), einem Ventilsitz (3), einem Ventilkörper (4) und einem Hubmagneten (5), in welchem die folgenden Verfahrensschritte in der folgenden Reihenfolge durchgeführt werden:
• Einpressen des Ventilsitzes (3) in das Gehäuse (2) in Richtung des im Gehäuse (2) angeordneten Ventilkörpers (4), insbesondere mittels einer vorzugsweise hydraulischen Presse, währenddessen zum einen einer sich zwischen dem Ventilsitz (3) und dem Ventilkörper (4) ausbildenden Ventilkammer (6) kontinuierlich ein Hydraulikfluid (7) zugeführt wird, und währenddessen zum anderen der zum Erzeugen einer Kraft (F) auf den Ventilkörper (4) in Richtung des Ventilsitzes (3) vorgesehene Hubmagnet (5) mit einem elektrischen Strom beaufschlagt wird,
• Beenden des Einpressens des Ventilsitzes (3) in das Gehäuse (2), wenn ein bestimmter Druck (bP) des Hydraulikfluids (7) innerhalb der Ventilkammer (6) erreicht ist.

2. Verfahren nach Anspruch 1, **dadurch gekennzeichnet, dass** während des Einpressens des Ventilsitzes (3) in das Gehäuse (2) das Hydraulikfluid (7) aus der Ventilkammer (6) und aus dem Gehäuse (2) über einen in dem Gehäuse (2) ausgebildeten Abführkanal (8), insbesondere zu einem Tank hin, abgeführt wird.

3. Verfahren nach Anspruch 1 oder 2, **dadurch gekennzeichnet, dass** der Hubmagnet (5) während des Einpressens des Ventilsitzes (3) in das Gehäuse (2) mit einem im Wesentlichen konstant hohen elektrischen Strom vorzugsweise von 350mA bis 450mA, insbesondere von 400mA, beaufschlagt wird.

4. Verfahren nach einem der vorangehenden Ansprüche, **dadurch gekennzeichnet, dass** der bestimmte Druck (bP) des Hydraulikfluids (7) innerhalb der Ventilkammer (6), bei welchem das Einpressen des Ventilsitzes (3) in das Gehäuse (2) beendet wird, einen Wert zwischen 15bar bis 25bar, vorzugsweise zwischen 18bar bis 22bar, insbesondere von 20bar, aufweist.

5. Verfahren nach einem der vorangehenden Ansprüche, **dadurch gekennzeichnet, dass** während des Einpressens des Ventilsitzes (3) in das Gehäuse (2) mittels einer zwischen einem Stößel (9) des Hubmagneten (5) und dem Gehäuse (2) angeordneten Feder (10) eine Kraft auf den Stößel (9) in einer dem Ventilsitz (3) entgegengesetzten Richtung ausgeübt wird.

6. Verfahren nach einem der vorangehenden Ansprüche, **dadurch gekennzeichnet, dass** das Hydraulikfluid (7) der Ventilkammer (6) mittels einer Pumpe (11) zugeführt wird und zum Erfassen des bestimmten Druckes (bP) des Hydraulikfluids (7) innerhalb der Ventilkammer (6) ein Druck (P) des Hydraulikfluids (7) stromabwärts der Pumpe (11) mittels eines Drucksensors (12) gemessen wird.

7. Verfahren nach Anspruch 6, **dadurch gekennzeichnet, dass** strömungstechnisch zwischen der Pumpe (11) und dem Drucksensor (12) ein Stromregelventil (13) angeordnet ist, mittels welchem ein im Westlichen konstanter Volumenstrom des Hydraulikfluids (7) von vorzugsweise 0,7L/min bis 0,9L/min, insbesondere von 0,8L/min, zur Ventilkammer (6) hin realisiert wird.

8. Verfahren nach einem der vorangehenden Ansprüche, **dadurch gekennzeichnet, dass** nach dem Beenden des Einpressens der Ventilsitz (3) mit dem Gehäuse (2) durch Realisierung einer entsprechenden Passung zwischen dem Ventilsitz (3) und dem Gehäuse (2) reibschlüssig verbunden ist.

9. Ventil (1), mit einem Gehäuse (2), einem Ventilsitz (3), einem Ventilkörper (4) und einem Hubmagneten (5), wobei der Ventilkörper (4) im Gehäuse (2) angeordnet ist und sich zwischen dem Ventilkörper (4) und dem zumindest zum Teil vom Gehäuse (2) aufgenommen Ventilsitz (3) eine Ventilkammer (6) ausbildet, und wobei der Hubmagnet (5) ausgebildet ist, eine Kraft (F) auf den Ventilkörper (4) in Richtung des Ventilsitzes (3) auszuüben, **dadurch gekennzeichnet, dass** zwischen dem Ventilsitz (3) und dem Gehäuse (2) eine Pressverbindung (14) ausgebildet ist.

10. Ventil (1) nach Anspruch 9, **dadurch gekennzeichnet, dass** der Ventilsitz (3) mit dem Gehäuse (2) durch eine Verbördelung (15) von Teilen des Ventilsitzes oder des Gehäuses (2) mit Bereichen des jeweiligen anderen Elements verbunden ist.
